# EUROPÄISCHE PATENTANMELDUNG

(11) **EP 0 729 015 A1**
(43) Veröffentlichungstag der Anmeldung: **28.08.1996**
(21) Anmeldenummer: 96102593.9
(22) Anmeldetag: 21.02.1996
(51) Int. Cl.: G01G 11/00

(54) **Vorrichtung zum Zuordnen von Gemüse und Obst nach Klassen und Chargen**

(30) Priorität: 21.02.1995 DE 19506041
(71) Anmelder: Frühauf, Allan, 84072 Au i.d. Hallertau (DE)
(72) Erfinder: Frühauf, Allan, 84072 Au i.d. Hallertau (DE)
(74) Vertreter: Zipse + Habersack

(57) **Zusammenfassung**

Die Erfindung betrifft eine Vorrichtung zum Zuordnen von Gemüse oder Obst nach unterschiedlichen Klassen und Chargen. Die Vorrichtung umfaßt eine Transportvorrichtung (12) für die zuzuordnenden Waren (13), eine im Bereich der Transportvorrichtung angeordnete Wägeeinrichtung (32,34,36), die mindestens eine Waage für unterschiedliche Warenklassen aufweist. Um eine Zuordnung der Waren in unterschiedliche Chargen zu ermöglichen, enthält die Transportvorrichtung einen Träger (24) für maschinenlesbare Identifikationsträger (26), mit welchem Identifikationsträger die auf dem Band befindlichen Waren einer Charge zugeordnet werden können. Im Verlauf der Transportvorrichtung ist eine Lesevorrichtung (28,42) zum Lesen des Identifikationsträgers vorgesehen. Eine Steuerung (22) gibt die einem Identifikationsträger zugeordneten Wägeergebnisse aus oder legt diese zur weiteren Auswertung zusammen mit der Kennung des Identifikationsträgers in einem Speicher ab.

## Beschreibung

Die Erfindung betrifft eine Vorrichtung zum Zuordnen von Waren wie Gemüse oder Obst nach unterschiedlichen Klassen und Chargen gemäß dem Oberbegriff des Anspruchs 1.

Derartige Vorrichtungen werden insbesondere für das Spargelstechen eingesetzt, bei dem die eingesetzten Hilfsarbeiter leistungsbezogen entlohnt werden. Die Bezahlung erfolgt unter Berücksichtigung der gesammelten Menge und der gesammelten Qualitäten. Derartige Vorrichtungen haben bislang ein Förderband, auf dem die Spargelstangen quer zur Förderrichtung angeordnet werden. An dem Band sitzen dann mehrere Sortierkräfte, die unterschiedlichen Spargelqualitäten auswählen und in eine zugeordnete Kiste legen.

Aus der DE 31 23 677 C2 ist eine Einrichtung bekannt, bei der Gegenstände wie z. B. Gebäckstücke in Chargen mit gleichem Gewicht zusammengestellt werden. Hierfür sind Waagschalen vorgesehen, die elektrische Signale an eine Steuerung abgeben. Die Gebäckstücke werden solange einer bestimmten Charge zugeführt, bis das Gesamtgewicht der Charge innerhalb eines bestimmten Bereichs um ein Referenzgewicht liegt. Mit dieser Vorrichtung ist es andererseits nicht möglich, Teile in unterschiedlicher Anzahl bestimmten Identifikationsträgern zuzuordnen.

Die DE 34 40 052 A1 zeigt eine Leseeinrichtung für eine Transportvorrichtung für Waren, welche mit einem Träger für maschinenlesbare Identifikationscodes versehen sind. Diese Identifikationscodes sind mit Taktmarkierungen versehen, so daß Lesefehler aufgrund unterschiedlicher Fördergeschwindigkeiten der Transportvorrichtung ausgeschlossen werden. Auch diese Vorrichtung ist jedoch nicht geeignet zur Zuordnung von Gemüse oder Obststücken auf einen bestimmten Sammler.

Es ist Aufgabe der Erfindung, eine Vorrichtung derart weiter zu entwickeln, daß Zuordnung der gesammelten Qualitäten auf eine Person mit weniger Zeitaufwand verbunden ist.

Erfindungsgemäß wird diese Aufgabe bei einer Vorrichtung der gattungsgemäßen Art mit den kennzeichnenden Merkmalen des Anspruchs 1 und des Anspruchs 4 gelöst. Vorteilhafte Weiterbildungen der Erfindung sind Gegenstand der Unteransprüche.

Nach der vorliegenden Erfindung wird jeder Hilfskraft eine Identifikationskennung zugeteilt, die auf einem Identifikationsträger vermerkt ist. Diesen Identifikationsträger kann die mit dem Ernten beschäftigte Hilfsperson bei sich tragen, oder es kann an einem Sammelkorb eine Lasche zur Aufnahme des Trägers vorgesehen sein. Wenn die Hilfsperson die gesammelten Früchte- oder Gemüsequalitäten zum Wiegen bringt, werden diese bislang auf einer Transportvorrichtung, z. B. einem Förderband, angeordnet.

In einer Ausführungsform der Erfindung legt die Hilfsperson ihren Identifikationsträger auf einen an der Transportvorrichtung vorgesehenen Träger. Im Verlauf der Transportvorrichtung ist eine Lesevorrichtung zum Lesen des Identifikationsträgers vorgesehen, so daß eine Steuerung alle folgenden bzw. vorhergehenden Wägungen diesem Identifikationsträger zuordnen kann. Der Identifikationsträger kann in Verbindung mit einer Anfangs- oder Endmarke verwendet werden, wodurch das System darüber informiert wird, daß mit der Marke der einem Identifikationsträger zugeordnete Chargenbereich anfängt, bzw. mit einer Endmarke aufhört. In der Regel wird die Zuordnung so gesteuert, daß alle nach dem Einlesen des Identifikationsträgers abgewogenen Obst- oder Gemüsequalitäten diesem Identifikationsträger zugeordnet werden, bis ein weiterer Identifikationsträger eingelesen wird. Es kann auch eine Zeitschaltung vorgesehen sein, die eine Chargenberechnung abschließt, wenn eine bestimmte Zeit lang keine Wägung mehr erfolgt. Nach dem Lesen des Identifikationsträgers werden alle nachfolgenden Wägungen in den verschiedenen Klassen diesem Identifikationsträger zugeordnet. Die Wägung kann hierbei entweder auf Absolutwerten oder auf Differenzwerten basieren. Wichtig ist, daß die Menge der unterschiedlichen Obst-oder Gemüsegualitäten genau erfaßt wird, so daß anschließend eine Größe für die Entlohnung der Hilfskraft bestimmt kann. Die Sortierung wird weiterhin von Hand durch geeignete Kräfte vorgenommen.

In einer anderen Ausführungsform der Erfindung wird der Identifikationsträger eingelesen, und die Charge wird dem neuen Träger erst dann zugeordnet, nachdem sichergestellt worden ist, daß die Wägung der vorherigen Charge abgeschlossen ist. Dies wird durch eine zeitliche Überprüfung der Wägeausgangssignale oder der Ausgangssignale einer Detektoreinrichtung realisiert, die zum Erfassen des Gutes an der Transportvorrichtung angeordnet ist. Haben sich diese Wäge- oder Detektorsignale für eine vorbestimmte Zeitspanne nicht geändert bzw. sind nicht aufgetreten, so geht man davon aus, daß die Wägung der vorherigen Charge abgeschlossen ist. Eine derartige Überprüfung läßt sich leicht mit einem Zähler oder Taktbaustein erzielen, der von einer Änderung bzw. dem Auftreten eines Signals gesetzt bzw. rückgesetzt wird. Das vorzugsweise digitale Zählsignal kann dann mit einem Referenzwert verglichen werden.

Die Waagen verfügen vorzugsweise über eine Schnittstelle mit einem digitalen Datenausgang, so daß die Wägeergebnisse direkt der Steuerung oder einer mit der Steuerung verbundenen Auswerteeinrichtung zugeleitet werden können. Dort werden die Wägeergehnisse mit abgespeicherten Bewertungsfaktoren multipliziert, die für die unterschiedlichen Obst- oder Gemüsequalitäten charakteristisch sind. Anschließend wird aus den gewichteten Klassenergebnissen durch Addition ein Gesamtergebnis bestimmt, das dann lediglich nur noch in einen Geldwert umgerechnet werden muß. Auch dies kann bereits durch die Auswerteeinrichtung erfolgen.

Vorzugsweise ist die Transportvorrichtung als Transportband ausgebildet. Der Träger kann in Form von an der Oberseite des Transportbandes ausgebildeten Taschen vorgesehen sein, in die die Identifikationsträger zumindest teilweise einsteckbar sind. Hier werden die Identifikationsträger unter anderem gut vor Verschmutzung geschützt. Der Träger kann in einer einfach zu handhabenden preisgünstigen Alternative in Form von Klammern ausgebildet sein, die den Identifikationsträger gegen das Transportband festlegen. Besonders vorteilhaft ist vom Standpunkt der Handhabung und Wartung, wenn der Träger als in Transportrichtung des Transportbandes verlaufendes Klettband ausgebildet ist, das mit einer komplementären Klettverbindungsfläche auf der Rückseite der Identifikationsträger zusammenwirkt.

In einer vorteilhaften Weiterbildung der Erfindung wird der Scanner zum Lesen des Identifikationsträgers auch zum Scannen der Warengröße und gegebenenfalls Warenfarbe (Grauwert) verwendet, wodurch auch die Klassenzuordnung automatisiert werden kann.

Die Erfindung wird nachfolgend beispielhaft an der Hand der schematischen Zeichnung beschrieben. In dieser zeigen:

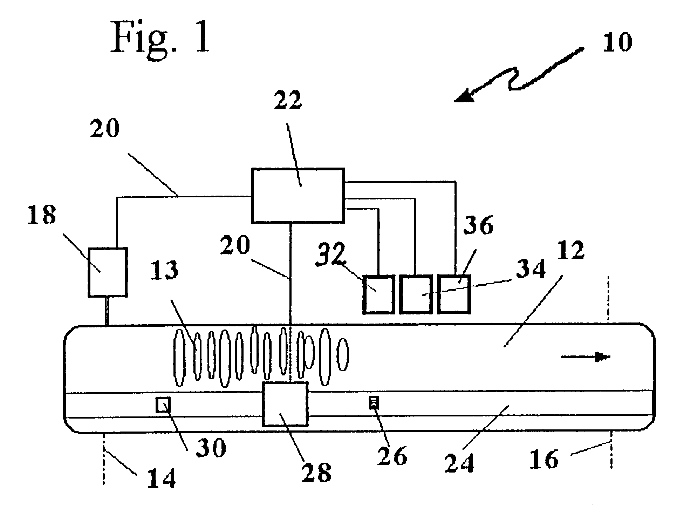

- Fig. 1: eine erfindungsgemäße Zuordnungsvorrichtung in Aufsicht,
- Fig. 2: eine Vorrichtung gemäß Fig. 1 mit automatisierter Klassenzuordnung, und
- Fig. 3: ein weiteres Ausführungsbeispiel einer erfindungsgemäßen Zuordnungsvorrichtung.

Die Figur zeigt eine Zuordnungsvorrichtung 10 mit einem Förderband 12, das um zwei horizontal angeordnete Umlenkachsen 14,16 läuft. Die Zuordnungsvorrichtung ist für die Zuordnung von Spargelqualitäten 13 auf unterschiedliche Erntehelfer konzipiert. Im Bereich der ersten Umlenkachse 14 ist ein Motor 18 zum Betätigen des Transportbandes 12 vorgesehen. Dieser Motor 18 ist über eine Datenleitung 20 mit einer zentralen Steuerung 22 verbunden. Auf dem Transportband 12 ist ein Träger 24 in Form eines Klettbandes vorgesehen. Auf diesen Träger 24 werden Identifikationsträger 26 angeordnet, die von einem Laserscanner 28 gelesen werden. Gegebenenfalls können auf dem Träger 24 noch Anfangs- oder Endmarkierungen 30 plaziert werden, die die Grenze der einem Erntehelfer zugeordneten Charge markieren. Die Grenze kann jedoch auch durch einen nachfolgenden Identifikationsträger markiert werden, der einem anderen Erntehelfer zugeordnet ist. Die Spargelqualitäten werden durch Sortierkräfte drei elektronischen Waagen 32,34,36 zugeführt, die über Datenkabel 20 mit der zentralen Steuerung 22 verbunden sind. Die Steuerung 22 weist das digital erhaltene Differenzwägesignal zwischen zwei Identifikationskennungen oder einer Identifikationskennung und einer Anfangs- bzw. Endmarke einem Identifikationsträger 26 zu. Die Steuerung 22 enthält eine Auswerteeinrichtung, die gleich die Wägeergebnisse der elektronischen Waagen 32,34,36 entsprechend der Klassenqualität mit einem Bewertungsfaktor multipliziert und auf diese Weise einen Wert ermittelt, auf dessen Basis die Entlohnung des Erntehelfers erfolgt. Der Wert kann auch direkt als Entgelt errechnet werden.

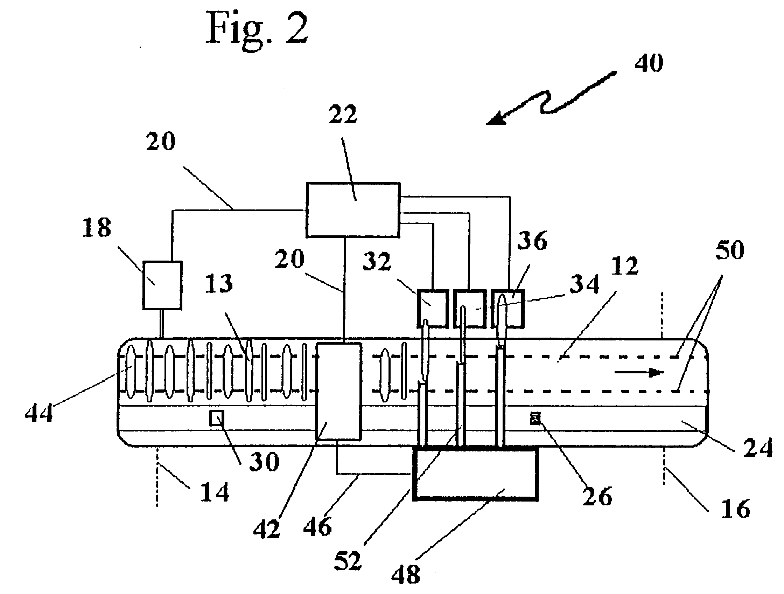

In einer sehr vorteilhaften Weiterbildung der Erfindung gemäß Fig. 2 kann der Laserscanner 42 zur Erfassung der Identifikationskennung gleichzeitig als Größenmeßgerät für das zu klassierende Gemüse bzw. Obst ausgebildet sein, in welchem Fall die Sortierung der gesammelten Waren auf die unterschiedlichen Waagen ebenfalls automatisiert erfolgen kann. In diesem Fall ist eine Betätigungsvorrichtung 48,52 vorgesehen, die in Abhängigkeit von dem Scannergebnis die Waren auf die unterschiedlichen Klassenwaagen 32,34,36 verteilt. Im Falle von Spargel kann das Transportband quer zu der mit dem Pfeil bezeichneten Förderrichtung ausgebildete Unterteilungen 50 aufweisen, wodurch eine exakte Ausrichtung der Spargel auf dem Transportband 12 gewährleistet ist. Bei einer Abtastung des Spargels durch den Scanner werden die Spargelqualitäten erfaßt, und drei quer zur Transportrichtung an einer Seite des Transportbandes angeordnete Schiebemechanismen 52 betätigt, welche die Spargelstangen axial auf die elektronischen Waagen 32,34,36 schieben können, die sich auf der anderen Seite des Transportbandes gegenüber den Schiebeeinrichtungen 52 befinden. Die in Figur 2 gezeigte Zuordnungsvorrichtung 40 enthält einen Laserscanner 42 zum Lesen des Identifikationsträgers 26 als auch zur Erfassung der Größe der länglichen Gemüseteile 44. Dieser ist über eine Datenleitung 20 mit der Steuerung 22 und über eine weitere Datenleitung 46 mit der Betätigungsvorrichtung 48 verbunden. Die länglichen Gemüseteile werden in Zwischenräume zwischen Führungsnoppen 50 gelegt, die in zwei Reihen parallel auf dem Transportband angeordnet sind, in der Art, daß auf das Band aufgelegtes längliches Gemüse oder Obst mit seiner Längsachse quer zur Transportrichtung ausgerichtet wird. Anstatt der Führungsnoppen 50 können auch Rippen und ähnliche Ausrichtungsanordnungen auf dem Band vorgesehen sein.

Der Scanner 42 erfaßt die Größe, Dicke, Grauwerte und/oder Farbmerkmale der einzelnen Obst- oder Gemüsestücke und betätigt in Abhängigkeit von diesen Parametern drei in Laufrichtung des Bandes hintereinander angeordnete Stempel 52 einer Betätigungseinrichtung 48, so daß die entsprechende Gemüse- oder Obstqualität aus der Führung zwischen den Noppen 50 auf eine entsprechende Waage 32 bis 36 geschoben wird, die für die entsprechende Qualität oder Klasse vorgesehen ist.

Diese Anlage arbeitet damit vollautomatisch und ermöglicht eine Sortierung des Gemüses oder Obstes in definierte Qualitätsklassen und die Zuordnung der Chargen zu bestimmten Identifikationsträgern. Es kann vorgesehen sein, daß Obst oder Gemüse, welches aus den vorgegebenen Klassen herausfällt, an das Ende des Bandes transportiert wird und dort in einen Behälter für Ausschußware fällt. Dieses Obst oder Gemüse wird demgemäß bei der Berechnung des Entgeltes für den dem Identifikationsträger zugeordneten Erntehelfer nicht berücksichtigt.

Abwandlungen der Erfindung jenseits der dargestellten Ausführungsbeispiele sind möglich. So kann z.B. anstelle eines speziell ausgebildeten Trägers für den Identifikationsträger das Transportband selbst als Träger fungieren, in welchem Fall der Identifikationsträger einfach auf das Transportband aufgelegt wird. Vorzugsweise sollte hier der Identifikationsträger auf einen definierten Bereich des Transportbandes aufgelegt werden, wenn nicht ein Scanner vorgesehen ist, der das Transportband über die gesamte Breite abtastet. Der Identifikationsträger kann z.B. eine Magnetschicht aufweisen, die mit einer Eisenstruktur unter dem Transportband zusammenwirkt, so daß ein Verschieben des Identifikationsträgers erschwert wird.

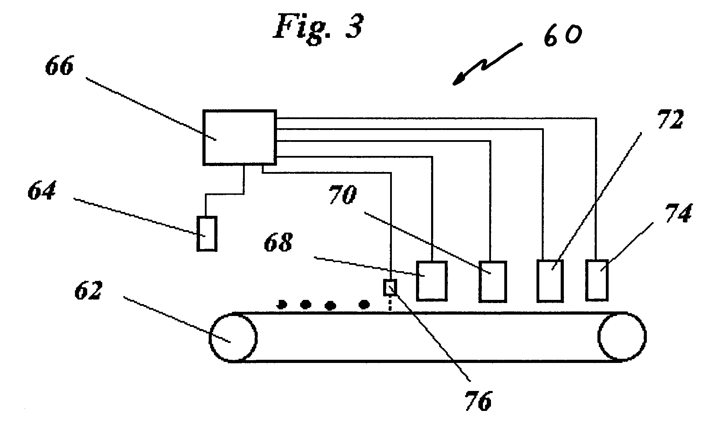

Fig. 3 zeigt ein weiteres Ausführungsbeispiel einer Zuordnungsvorrichtung. Die Vorrichtung 60 enthält ein Förderband 62, auf welches das gesammelte Gut aufgelegt wird. Am Beginn des Förderbandes im Auflagebereich des Gutes ist eine Lesevorrichtung 64 vorgesehen, in die ein Identifikationsträger eingeführt werden kann. Die Lesevorrichtung 64 ist mit einer Steuerung 66 verbunden, die wiederum Eingänge für die Ausgangssignale von vier Waagen 68,70,72,74 einer Wägeeinrichtung aufweist.

In der Steuerung ist eine Zuordnungslogik vorgesehen, die das Ausgangssignal jeder Waage auf Änderungen hin untersucht. Wird eine derartige durch Beaufschlagung der Waage mit dem zu klassifizierenden Gut verursachte Änderung festgestellt, so wird ein Zähler zurückgesetzt, der ein zeitgebundenes Ausgangssignal liefert. Dieser Zähler zählt zeitgetaktet nach oben, bis er durch eine weitere Änderung des Ausgangssignals wieder rückgesetzt wird. Der Ausgang des Zählers dient als Vergleichswert für eine Vergleichsschaltung und wird auf einen ersten Eingang eines Komparators dieser Schaltung gelegt, an dessen zweitem Eingang ein vorbestimmter Referenzwert gelegt ist. Dieser Referenzwert entspricht dem einer bestimmten Zeitspanne entsprechenden Zählwert des Zählers. Überschreitet der Zählwert des Zählers am ersten Eingang den Referenzwert am zweiten Eingang, so wird für die entsprechende Waage ein Wägeendesignal abgegeben. Geben die Komparatoren für alle Waagen ein Wägeendesignal ab, so gibt die Vergleichsschaltung ein Wägeendesignal an die Steuerung ab, um anzuzeigen, daß der Wägevorgang für eine Charge abgeschlossen ist und mit der Wägung einer neuen Charge begonnen werden kann. Der Referenzwert kann für alle Waagen auf einen gleichen Wert oder unterschiedliche Werte gesetzt werden. Ein geeigneter Wert läge z.B. in einem Bereich von ca. 10 sec. bis 30 sec.. Diese Zeitsteuerung ist wesentlich, um zu verhindern, daß die zeitgleich beim Einlesen eines neuen Identifikationsträgers gemachten Wägungen des Gutes einer vorherigen Charge bereits dem neuen Identifikationsträger zugeordnet werden. Daher werden die Wägungen erst dem neuen Identifikationsträger zugeordnet, wenn alle Waagen eine bestimmte Zeit lang nicht mit einem neuen Gut beaufschlagt worden sind. Dies ist der Fall, wenn eine Charge gewogen worden ist, und die neue Charge aufgelegt wird, wozu auch das Förderband angehalten werden kann. Falls etwas unvorhergesehenes passiert, z.B. daß Gut von dem Förderband hinunterfällt, können die Zähler durch einen Schalter angehalten bzw. zurückgesetzt werden, weil andernfalls eventuell die entstehende Wägepause als Wägeende mißinterpretiert werden würde.

Die Zuordnungslogik der Steuerung kann auch das Einlesen eines neuen Identifikationsträgers erst dann zulassen, wenn die Vergleichsschaltung ein Wägeendesignal generiert hat. Dies hätte jedoch den Nachteil, daß mit dem Einlesen der neuen Charge gewartet werden muß, bis die vorherige Charge fertig gewogen worden ist. Dies ist im allgemeinen nicht nötig, da mehrere Chargen beabstandet auf dem Band angeordnet und die zugehörigen Kennungen bereits eingelesen sein können.

Anstelle einer derartigen zeitlichen Auswertung der Waagenausgangssignale ist es ebenfalls möglich, die Signale einer am Förderband angeordneten Detektionseinrichtung 76, z.B. einer Lichtschranke zum Erfassen von Gut auf dem Förderband zur Generierung eines Wägeendesignals auszuwerten, in welchem Fall bei einer räumlich beabstandeten Anordnung der Chargen auf dem Förderband und/oder bei einem Bandstopp beim Neuauflegen einer Charge ebenfalls eine saubere Trennung der einzelnen Chargen und damit eine einwandfreie Zuordnung zu einem Identifikationsträger möglich wäre.

Daher ist es auch von Vorteil, wenn die Steuerung über einen Speicher für mehrere Kennungen von Identifikationsträgern verfügt, der in der Reihenfolge der Eingabe abgearbeitet wird.

Es ist nicht unbedingt notwendig, daß das zeitgebundene Signal das auf oder abzählende Signal eines Zählers ist. Ein Signal kann auch durch ständige Differenzbildung des Änderungszeitpunktes mit dem aktuellen Zeitwert gebildet sein. Es sind alle Arten von Signalen möglich, die einen Rückschluß darauf erlauben, welcher Zeitraum zwischen der letzten Änderung des Ausgangssignals der Waage oder Detektionseinrichtung und der aktuellen Systemzeit liegt.

Bei Auftreten einer Änderung des Ausgangssignals der Waage 68 bis 74 oder Detektionseinrichtung 76 kann auch ein Zähler auf einen vorbestimmten Referenzwert gesetzt werden, wobei ein Wägeendesignal abgegeben wird, wenn der Zähler auf Null herabgezählt hat.

Es ist weiterhin möglich, das Ausgangssignal nicht auf eine Änderung hin zu überprüfen, sondern überhaupt auf das Auftreten eines Wiege- bzw. Detktionssignals. Denn es ist ohne weiteres möglich, eine Detektionseinrichtung 76 zu verwenden, die lediglich ein binäres Signal abgibt, das die Existenz oder Nichtexistenz eines detektierten Guts auf der Transportvorrichtung anzeigt.

## Patentansprüche

1. Vorrichtung zum Zuordnen von Waren, wie Gemüse oder Obst nach unterschiedlichen Klassen und Chargen, mit einer Transportvorrichtung (12) für die Waren (13), und einer im Bereich der Transportvorrichtung angeordneten Wägeeinrichtung, die mehrere Waagen (32,34,36) für unterschiedliche Warenklassen aufweist,
dadurch **gekennzeichnet**,
daß die Transportvorrichtung einen Träger (24) für maschinenlesbare Identifikationsträger (26) für eine Charge aufweist, daß im Verlauf der Transportvorrichtung eine Lesevorrichtung (28) zum Lesen des Identifikationsträgers vorgesehen ist, daß eine Steuerung (22) vorgesehen ist, die die einem Identifikationsträger zugeordneten Wägeergebnisse ausgibt oder zur weiteren Auswertung zusammen mit der Kennung des Identifikationsträgers in einem mit der Steuerung verbundenen Speicher ablegt.

2. Vorrichtung nach Anspruch 2,
dadurch **gekennzeichnet**,
daß die Waagen (32,34,36) als elektronische Waagen mit einem digitalen Datenausgang ausgebildet sind, deren Signal durch die Steuerung (22) gesteuert auslesbar ist.

3. Vorrichtung nach einem der vorhergehenden Ansprüche,
dadurch **gekennzeichnet**,
daß Marken (30) vorgesehen sind, die ebenfalls auf dem Träger (24)aufbringbar sind, um die Grenze der einem Identifikationsträger (26) zuzuordnenden Wägungen zu markieren.

4. Vorrichtung zum Zuordnen von Waren, wie Gemüse oder Obst nach unterschiedlichen Klassen und Chargen, mit einer Transportvorrichtung (62) für die Waren, und einer im Bereich der Transportvorrichtung angeordneten elektronischen Wägeeinrichtung, die mehrere Waagen (68,70,72,74) für unterschiedliche Warenklassen aufweist, welche Waagen ein mit dem Wägeergebnis korreliertes Ausgangssignal abgeben
dadurch **gekennzeichnet**,
daß an der Transportvorrichtung (62) eine Lesevorrichtung (64) für einen maschinenlesbaren Identifikationsträger zum Zuordnen einer Charge angeordnet ist,
daß eine Steuerung (66) vorgesehen ist, die mit der Lesevorrichtung (64), der Wägeeinrichtung (68,70,72,74) und/oder einer an der Transportvorrichtung (62) angeordneten Detektionseinrichtung (76) verbunden ist,
daß die Steuerung (66) wenigstens eine Zuordnungslogik aufweist, die das Gut einer Charge nur dann neu zuordnet, wenn ein neuer Identifikationsträger eingelesen worden ist und das Ausgangssignal der wenigstens einen Waage (68,70,72,74) und/oder Detektionseinrichtung (76) daraufhin überprüft weorden ist, daß eine vorbestimmte Zeitspanne seit dem letzten Wägevorgang und oder der letzten Detektion eines Gutes auf der Transportvorrichtung (62) verstrichen ist, wobei die Steuerung dann die dem Identifikationsträger zugeordneten Wägeergebnisse einer Charge ausgibt oder zur weiteren Auswertung zusammen mit der Kennung des Identifikationsträgers in einem mit der Steuerung verbundenen Speicher ablegt.

5. Vorrichtung nach Anspruch 4,
dadurch **gekennzeichnet**,
daß die Zuordnungslogik das Ausgangssignal der Waage (68,70,72,74) oder der Detektionseinrichtung (76) auf Änderungen oder bestimmte Signalwerte hin überprüft und den Zeitpunkt der Änderung bzw, des Auftretens eines Signalwertes in ein zeitgebundenes Signal überführt, aus dem die Zuordnungslogik ein das Ende einer Chargenwägung kennzeichnendes Wägeendesignal ableitet.

6. Vorrichtung nach Anspruch 4 oder 5,
dadurch **gekennzeichnet**,
daß die Zuordnungslogik wenigstens eine Vergleichsschaltung aufweist, die das zeitgebundene Signal mit einem Referenzwert vergleicht und ein das Ende einer Chargenwägung kennzeichnendes Wägeendesignal ausgibt, wenn das Signal in einer bestimmten Beziehung zum Referenzwert steht.

7. Vorrichtung nach einem der Ansprüche 4 bis 6,
dadurch **gekennzeichnet**,
daß das zeitgebundene Signal als Ausgangswert eines zeitgetakteten Zählers vorliegt, der zum Zeitpunkt einer Anderung des Ausgangssignals der Waage (68,70,72,74) oder der Detektionseinrichtung (76) auf den Referenzwert gesetzt oder zurückgesetzt wird.

8. Vorrichtung nach Anspruch 7,
dadurch **gekennzeichnet**,
daß ein Schalter zum Unterbrechen und/oder Setzen bzw. Rücksetzen des Zählers vorgesehen ist.

9. Vorrichtung nach einem der Ansprüche 4 bis 8,
dadurch **gekennzeichnet**,
daß die Steuerung (66) die Leseeinrichtung (64) zum Einlesen eines neuen Identifikationsträgers erst freigibt, nachdem die Vergleichsschaltung ein Wägeendesignal für eine vorherige Charge abgegeben hat.

10. Vorrichtung nach Anspruch 6,
dadurch **gekennzeichnet**,
daß für jede einzelne Waage (68,70,72,74) jeweils eine Vergleichsschaltung vorgesehen ist, wobei ein Wägeendesignal erst dann generiert wird, wenn alle Vergleichsschaltungen ein Wägeendesignal abgegeben haben.

11. Vorrichtung nach einem der vorhergehenden Ansprüche,
dadurch **gekennzeichnet**,
daß die Steuerung oder eine mit der Steuerung verbundene Auswerteeinrichtung über einen Speicher zur Speicherung von Kennungen und Wägeergebnissen verfügt,
daß weiterhin ein Speicher zur Abspeicherung von Bewertungsfaktoren für die den einzelnen Klassen zugeordneten Wägeergebnisse vorgesehen ist.

12. Vorrichtung nach einem der vorhergehenden Ansprüche,
dadurch **gekennzeichnet**,
daß eine Lesevorrichtung (42) zum Erfassen der Größe der Waren ausgebildet ist, deren Ausgangssignal eine Betätigungseinrichtung (48,52) zum Verteilen von Waren (13) auf verschiedene Waagen (32,34,36) ansteuert.

13. Vorrichtung nach einem der Ansprüche 1 bis 12,
dadurch **gekennzeichnet**,
daß eine Lesevorrichtung (42) vorgesehen ist, die sowohl zum Lesen des Identifikationsträgers (26) als auch zum Erfassen der Warenklasse ausgebildet ist.
